# FASCICULE DE BREVET EUROPEEN

(11) **EP 1 276 646 B1**
(45) Date de publication et mention de la délivrance du brevet: **15.06.2005**
(21) Numéro de dépôt: 01929700.1
(22) Date de dépôt: 25.04.2001
(51) Int. Cl.: B60R 21/26, A41D 13/018

(54) **DISPOSITIF DE PROTECTION D'UN INDIVIDU, COMPRENANT UN COUSSIN GONFLABLE**
INDIVIDUELLE SCHUTZVORRICHTUNG MIT AIRBAG
DEVICE FOR INDIVIDUAL PROTECTION, COMPRISING AN AIRBAG

(30) Priorité: 25.04.2000 FR 0005335
(43) Date de publication de la demande: 22.01.2003
(73) Titulaire: API, 93170 Bagnolet (FR)
(72) Inventeur: CASTAGNER, Bernard, F-77700 Coupvray (FR); CASTAGNER, Rémi, F-77700 Coupvray (FR)
(74) Mandataire: Vercaemer, Laurence
(86) Numéro de dépôt international: PCT/FR2001/001265
(87) Numéro de publication internationale: WO 2001/081128

(56) Documents cités:
- EP-A- 0 925 730
- DE-A- 4 005 768
- DE-C- 19 834 392
- FR-A- 2 650 189
- FR-A- 2 735 661
- GB-A- 1 524 022
- US-A- 3 930 667
- US-A- 5 362 098
- US-A- 5 839 754
- US-A- 6 032 299

## Description

La présente invention a pour objet un dispositif de protection d'un individu, en particulier le conducteur d'un deux-roues, comprenant un coussin gonflable porté par l'individu selon le préambule de la revendication 1, comme connu de US-A-6 032 299.

Devant l'accroissement du nombre d'utilisateurs de deux-roues et du nombre d'accidents graves, la nécessité de protéger le motard en cas d'accident est devenue une préoccupation majeure. Le port obligatoire du casque dans certains pays a été une des principales décisions prises en ce sens. Cependant, des progrès peuvent encore être réalisés.

Constatant l'intérêt de la protection par coussin gonflable (« Airbag ») dans le domaine automobile, on a cherché à concevoir et développer un dispositif équivalent adapté pour être porté par un individu, et donc en particulier par le conducteur d'un deux-roues.

Différents dispositifs ont fait l'objet de demandes de brevet. On citera à titre d'exemple la demande de brevet britannique GB 1 524 022, qui date de 1974, et qui décrit un tel dispositif de protection d'un individu, comprenant un coussin gonflable. Le gonflage est assuré par un générateur de gaz pyrotechnique monorégime, déclenché par un signal radio. On peut également citer la demande de brevet européen EP043990, qui décrit un dispositif de protection dont le gonflage est assuré par une cartouche de gaz comprimé, déclenchée par la rupture d'une liaison filaire.

Des dispositifs sont aujourd'hui commercialisés. Ils sont du type décrit dans la demande de brevet EP043990 citée plus haut, et peuvent être caractérisés par la présence d'une structure gonflable, d'un petit réservoir de gaz sous pression dont l'ouverture permet le gonflement de la structure gonflable, et d'un fil reliant le motard à la moto et qui déclenche le gonflement lorsqu'il subit une traction.

Plusieurs remarques s'imposent. Les dispositifs actuellement sur le marché peuvent être améliorés en terme d'absorption d'énergie sans rebond. De plus, Le gonflage par ouverture d'un petit réservoir de gaz sous pression présente quatre inconvénients majeurs :
- le délai de gonflage de la structure de protection est élevé au regard de la rapidité à laquelle se produit l'accident et les éventuels contacts du motard avec des obstacles,
- le volume du réservoir et de son système de déclenchement est important,
- La dureté de ce réservoir peut engendrer des blessures significatives même en cas d'accident sans gravité,
- la présence permanente, pendant toute la durée de vie de l'équipement, de ce réservoir sous haute pression contre le corps n'est pas très rassurante.

Un autre inconvénient des dispositifs actuellement commercialisés est que le déclenchement par traction sur un fil n'est pas souhaité par les motards, car il engendre des fonctionnements intempestifs en cas de chute à l'arrêt ou à faible vitesse, ou en cas d'oubli du dégraphage lors de la descente de moto.

Par ailleurs, les générateurs de gaz pyrotechniques ne permettent pas de maintenir le coussin sous pression pendant les plusieurs secondes nécessaires pour répondre aux différentes situations accidentologiques. En effet, sous l'effet de la baisse rapide de température du gaz après gonflage, la pression dans le coussin gonflable diminue. Or les analyses accidentologiques montrent qu'il est nécessaire de gonfler la structure de protection très rapidement, maximum 50 ms, puis de maintenir cette structure gonflée pendant quelques secondes. Un gonflage rapide mais non maintenu n'est pas suffisamment efficace pour permettre au dispositif de sécurité de remplir complètement son rôle.

Ainsi, en dépit des nombreuses recherches effectuées dans ce domaine, et du développement d'un certain nombre de dispositifs contenant un coussin gonflable depuis plus de vingt ans, il subsiste un besoin pour un dispositif de protection comprenant un coussin gonflable porté par un individu, à gonflage à la fois rapide et maintenu. Les Demandeurs ont réussi à mettre au point un tel dispositif.

La présente invention a donc pour objet un dispositif de protection comprenant un coussin gonflable porté par un individu selon la revendication 1.

Par générateur de gaz pyrotechnique, on entend un générateur permettant la génération de gaz par combustion. On peut utiliser en particulier du propergol. Le propergol utilisé pour le 1^{er} régime est de préférence à basse vitesse et basse pression de combustion, et la charge de propergol se présente de préférence sous forme de plaques gaufrées par plots ou en continu, de préférence par plots, empilées et de préférence maintenues par des bossages inclus dans le corps ou le bouchon de la chambre. La charge de propergol du 2^{ème} régime est de préférence de même type que le propergol du 1^{er} régime, et se présente sous forme d'un jonc inclus dans un inhibiteur.

Dans un mode de réalisation préférentiel, le générateur de gaz est monoallumage.

L'allumage du gaz contenu dans la 1^{ère} chambre de combustion et correspondant au 1^{er} régime de combustion est assuré de préférence par un allumeur électrique, et l'allumage du gaz contenu dans la 2^{ème} chambre de combustion et correspondant au 2^{ème} régime de combustion est assuré par les gaz chauds générés par la combustion du propergol contenu dans la 1^{ère} chambre de combustion.

De façon préférée, la désobturation du générateur de gaz se fait par translation d'un désobturateur de col, dont le mouvement est généré par la pression dans la 1^{ère} chambre de combustion du générateur, dès que ladite pression atteint un niveau seuil permettant le cisaillement d'une goupille calibrée.

Le dispositif selon l'invention permet d'assurer une première phase de gonflage d'une durée de 60 ms maximum, de préférence de 30 à 50 ms ; puis une deuxième phase de maintien du gonflage d'une durée d'au moins quelques secondes, de préférence au moins 4 s, de préférence encore de 5 à 8 s.

Le dispositif de protection selon l'invention peut être utilisé par le conducteur d'un deux-roues ou autre véhicule automobile, en particulier les motards, les utilisateurs de quads, side-cars, etc. On peut aussi envisager des utilisations dans toute autre activité à risque, telle que l'équitation ou certaines activités dans le bâtiment. Dans cette demande, le terme individu désignera l'utilisateur ou individu à protéger, et le terme véhicule désignera le support de l'individu, tel qu'un véhicule, motocycle ou autre, ou un cheval.

Le coussin de protection peut être de dimensions variables et de forme quelconque appropriées à l'utilisation et à l'individu, et qui pourront aisément être déterminées par l'homme de l'art. Pour un motard, il couvrira de préférence la nuque, la poitrine et partiellement le dos de l'individu. Il sera réalisé en tout matériau approprié connu de l'homme de l'art, en particulier en tissu polyamide étanché par un revêtement PVC ou polyuréthane.

Dans un mode de réalisation préférentiel, le coussin gonflable permettra un amortissement de la chute simple et non élastique, en évitant les rebonds. En effet, sous la contrainte de compression créée par le choc, la structure du dispositif se déforme et la pression augmente. L'effet sur le corps de l'individu est alors brutal et il est suivi d'une possible phase de rebondissement lors de la chute. Pour éviter ces deux phénomènes, le dispositif selon l'invention comprendra donc de préférence un ou plusieurs évents d'amortissement, encore appelés évents de désobturation sous une pression seuil. Par éjection d'une partie des gaz au-delà de ladite pression seuil, on limite les contraintes sur le corps de l'individu et les effets de rebond. Ces évents sont préférentiellement en élastomère. Ils présentent de préférence des lignes de pré-fragilisation pour assurer une rupture régularisée.

Dans un mode de réalisation préféré, le moyen de déclenchement du générateur de gaz birégime est électronique, et comprend un module capteur-émetteur placé sur le véhicule et transmettant des informations à un module récepteur-allumage placé sur l'individu. Le module capteur-émetteur comprend un composant ou senseur de détection d'accident (capteur), et un composant de transmission d'un signal (émetteur). Le module récepteur-allumage comprend un composant de récepteur du signal transmis par le module capteur-émetteur (récepteur), et un composant de déclenchement du gonflage (allumage). La transmission entre ces deux modules se fait préférentiellement par liaison radiocodée, mais on peut également envisager d'autre type de liaison, par exemple une liaison filaire.

Dans le cas d'une liaison filaire, ladite liaison filaire ne sert qu'à transmettre l'information entre les deux modules, sa rupture ou son débranchement en cas de chute ne déclenche pas l'allumage du générateur de gaz. Elle n'a donc pas, dans ce cas, la fonction des liaisons filaires de l'art antérieur, qui constituent le moyen d'allumage du générateur de gaz.

L'un ou l'autre des modules comprend un composant discriminant, c'est-à-dire d'analyse des informations transmises par le capteur. Le déclenchement ou non-déclenchement du générateur est le résultat d'une comparaison des informations détectées par rapport à des valeurs seuils de un ou plusieurs paramètres.

Le module récepteur-allumage sera placé de préférence dans le boîtier du générateur de gaz birégime.

Dans un mode de réalisation préférentiel de l'invention, le capteur ou senseur de détection d'accident est constitué d'un capteur accélérométrique trois axes placé sur la moto : axe Ox (axe horizontal dans le repère terrestre et selon l'axe longitudinal de la moto), axe Oy (axe horizontal dans le repère terrestre et selon l'axe transversal de la moto), et axe Oz (axe vertical dans le repère terrestre). En fonction du type d'accident, choc frontal ou latéral entre le véhicule et un obstacle fixe ou mobile, dérapage non contrôlé du véhicule, etc., ce sont les informations provenant de tel et/ou tel axe qui seront utilisées.

En particulier, dans le cas d'un choc entre le véhicule et un obstacle fixe ou mobile, ce sont les informations sur les axes Ox et Oy qui sont utilisées. Selon l'invention, la discrimination se fera alors essentiellement selon deux seuils :
a) Niveau de décélération supérieur aux seuils Γys et Γxs, et
b) Niveau d'intégrale de décélération au-dessus des seuils Γys et Γxs supérieur à un niveau seuil Is et calculé selon des séquentiels de temps.

Dans le cas d'un dérapage de la moto et de sa chute latérale, ce sont les informations sur les axes Oy et Oz qui sont utilisées. Selon l'invention, la discrimination se fera alors essentiellement selon deux seuils :
a) Niveau du rapport Γ₁ = Γys/Γzs ou Γ₂ = Γzs/Γys au-dessus d'un rapport seuil Γₛ avec filtrage des fréquences « parasites » dues aux tressautements de la moto sur des irrégularités routières et aux inclinaisons souhaitées par les pilotes pour effectuer les variations de trajectoire, et
b) Niveau d'intégrale des rapports Γ₁ et Γ₂ supérieur au taux seuil Γₛ calculés selon un séquentiel de temps.

Dans un mode de réalisation de l'invention, pour éviter les déclenchements lors d'un basculement de la moto à l'arrêt ou à faible vitesse, le composant discriminant du moyen de déclenchement du générateur de gaz prendra en compte un paramètre de non-déclenchement du dispositif, à savoir une valeur de la vitesse V de la moto supérieure à une vitesse seuil Vₛ. Par contre, ce paramètre de non-déclenchement ne sera pas pris en compte dans le cas d'un choc, car celui-ci peut se produire lors de l'immobilisation du véhicule, par une percussion arrière ou latérale par un obstacle mobile.

Dans certains cas, plusieurs individus peuvent utiliser le même véhicule. Il est alors intéressant de pouvoir utiliser ce véhicule muni du module capteur-émetteur avec plusieurs modules récepteur-allumage portés chacun par un individu différent. Des problèmes de reconnaissance entre les modules peuvent alors se poser. Par conséquent, dans un mode de réalisation préféré, le module capteur-émetteur est également équipé d'un composant de réalisation du codage, et le module récepteur-allumage est également équipé d'un composant d'acquisition du codage. A chaque premier contact entre un module capteur-émetteur et un module récepteur-allumage, le code sera transmis de l'un à l'autre module, ce qui permettra la reconnaissance mutuelle, afin de permettre une transmission d'information efficace entre les deux modules au cours de l'utilisation du dispositif de protection. Afin d'éviter les perturbations sur les autres équipements pouvant être à proximité, l'opération de codage se fait, selon l'invention, préférentiellement à l'aide d'une liaison filaire à la sortie du composant de réalisation du codage.

Le déclenchement du générateur peut également se faire par tout moyen approprié autre qu'électronique. En particulier, il pourra se faire par liaison filaire rompue ou tendue, bien qu'un tel mode de réalisation ne soit pas préféré pour les raisons détaillées précédemment.

Le dispositif de protection peut être positionné de manière fixe ou amovible sur ou dans le vêtement porté par l'individu, en particulier dans un gilet.

Tous les éléments constituant le générateur de gaz d'un dispositif selon l'invention sont de préférence en matériau composite ou thermoplastique renforcé mécaniquement ou thermiquement par des fibres ou des poudres.

Dans un mode de réalisation préféré, le dispositif selon l'invention comprend un témoin d'aptitude fonctionnelle, en particulier visuel et/ou sonore, afin que l'individu puisse vérifier, par exemple au début de l'utilisation ou périodiquement au cours de l'utilisation, que le dispositif fonctionne correctement. A titre d'exemple, ce témoin peut être un composant du moyen de déclenchement du générateur de gaz.

L'invention va maintenant être décrite plus en détails au moyen des figures ci-après, dans lesquelles :
- La figure 1 représente de manière très schématique les différents éléments composant un dispositif de protection selon l'invention,
- la figure 2 représente une vue en coupe d'un générateur de gaz selon l'invention,
- la figure 3 représente une vue en coupe d'un générateur de gaz selon l'invention dont le boîtier contient le module récepteur-allumage,
- la figure 4 représente l'interface générateur de gaz / coussin gonflable dans un dispositif de protection selon l'invention,
- Les figures 5, 6 et 7 présentent des vues en perspective des trois pièces de l'interface générateur de gaz / coussin gonflable de la figure 4,
- La figure 8 présente une coupe longitudinale du générateur de gaz d'un dispositif de protection selon l'invention,
- Les figures 9, 10 et 11 présentent trois coupes transversales du générateur de gaz de la figure 6, au niveau des axes AA', BB', et CC', respectivement.

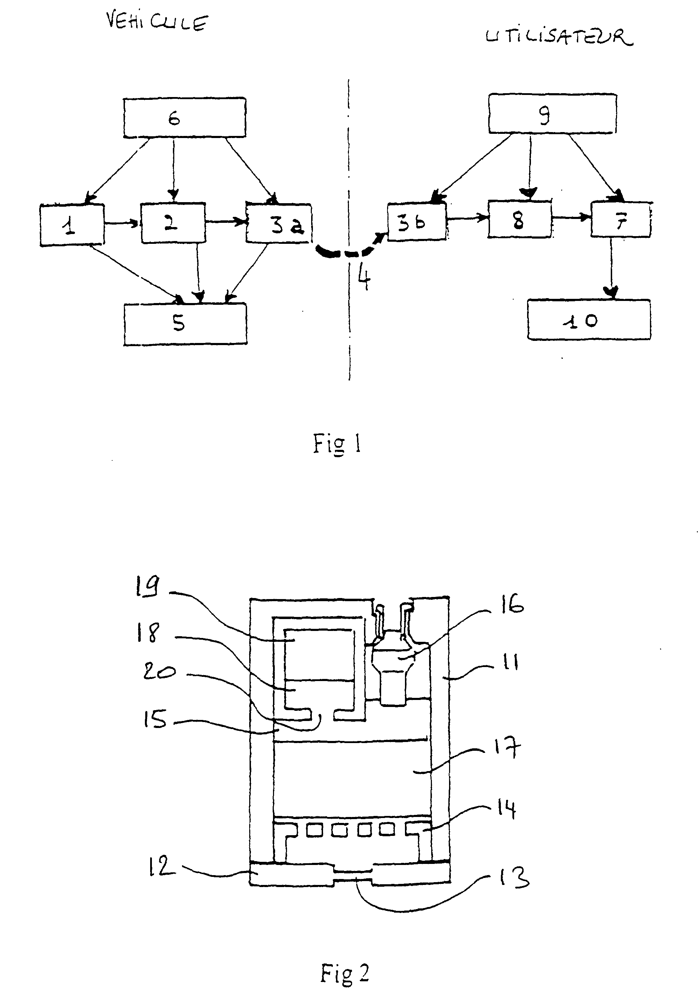

Tel que représenté sur la figure 1, le dispositif de protection selon l'invention comprend un moyen de déclenchement du générateur de gaz comprenant un module électronique capteur-émetteur et un module électronique récepteur-allumage. Le module capteur-émetteur, placé sur le véhicule, comprend les composants suivants : un senseur de détection d'accélération triaxial (1), un module électronique de traitement et de discrimination d'accident (2), un émetteur radiocodé (3a) et son composant de réalisation du codage, un sous-ensemble témoin visuel et/ou sonore d'aptitude fonctionnelle (5), et une source d'énergie (6) (par exemple pile ou batterie). Le module récepteur-allumage comprend les composants suivants : un récepteur radiocodé (3b) et son composant d'acquisition du codage, une source d'énergie (9), et un module électronique de déclenchement (8) de l'allumage du générateur (7). Ce module, ainsi que le générateur de gaz pyrotechnique bi-régime (7) et le coussin gonflable (10), sont placés sur l'individu.

La liaison (4) entre le module placé sur le véhicule et le module placé sur l'individu est dans ce mode de réalisation une liaison radiocodée.

Le générateur de gaz représenté schématiquement en figure 2 permet d'expliquer le principe de fonctionnement du birégime. Ce générateur comprend un boîtier (11) fermé par un couvercle (12) équipé d'un obturateur (13) préfragilisé. Ce couvercle supporte le diffuseur (14). La chambre de combustion 1^{er} régime (15) contient l'allumeur électrique de sécurité (16) et le propergol (17) dont la combustion génère les gaz destinés à assurer le gonflage rapide du coussin gonflable. La chambre de combustion 2^{ème} régime (18) contient le propergol (19) dont la combustion génère les gaz destinés au maintien de la pression dans le coussin gonflable. La régularité de la combustion 2^{ème} régime est assurée par le mini col (20). Dans la phase de maintien de la pression, la chambre de combustion 1^{er} régime devient une chambre de détente.

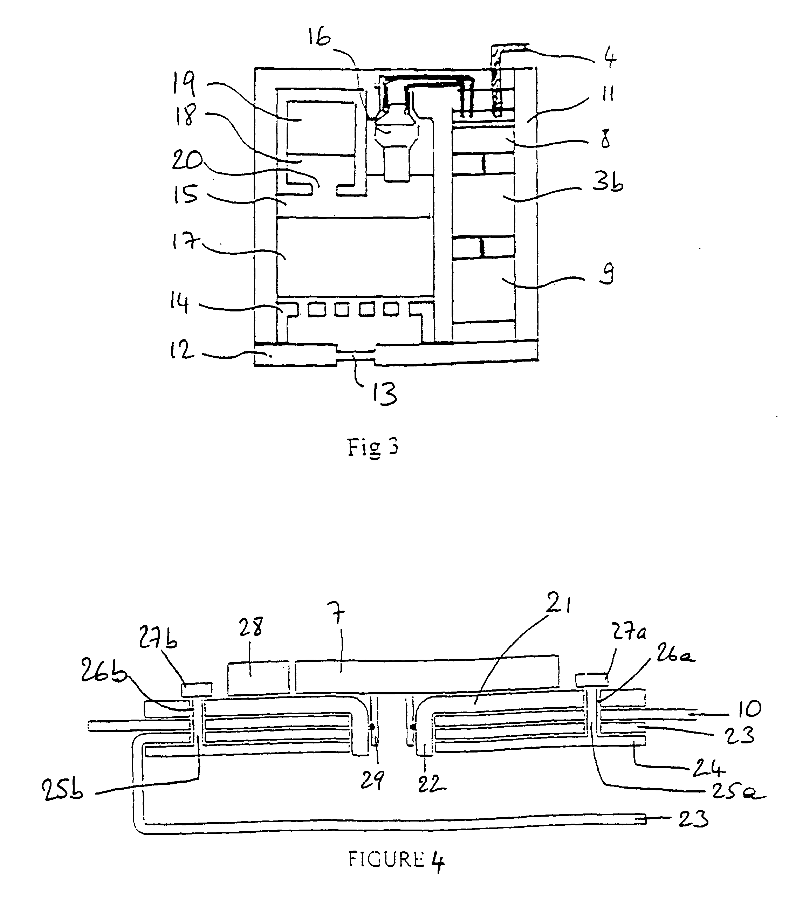

Le générateur peut contenir les éléments électroniques du module récepteur-allumage, tel que représenté schématiquement en figure 3, dans un logement connexe à la chambre 1^{er} régime (15). Ces éléments sont le fil de connexion (4) ou alternativement le récepteur radio (3b), le module de déclenchement (8), la source d'énergie (9).

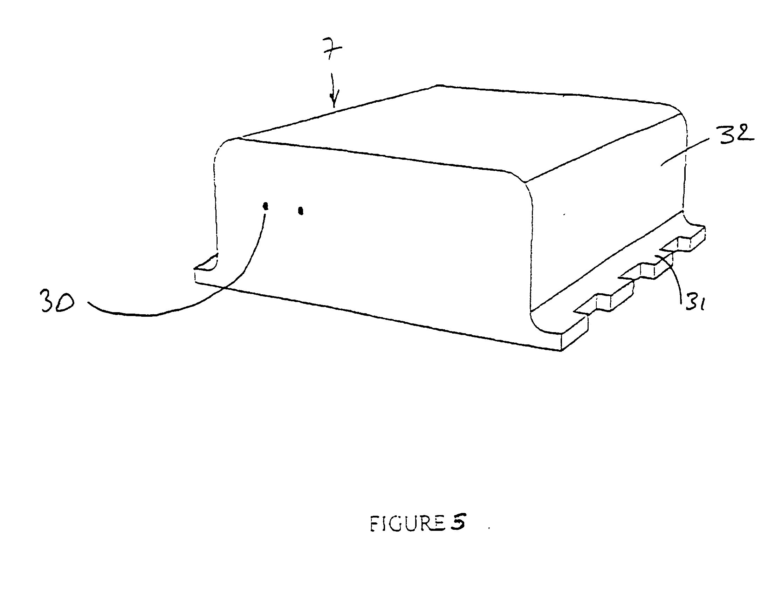

Dans le mode de réalisation représenté en figure 4, qui est un exemple concret de réalisation, l'interface entre le coussin gonflable (10) et le générateur de gaz (7) comprend :
- une platine (21), de préférence en matériau plastique chargé fibre de verre. Cette platine comporte, en particulier, un tube de centrage (22) qui sert à positionner l'ensemble des éléments les uns par rapport aux autres,
- le tissu du coussin gonflable (10),
- la paroi de l'étui de protection (23), qui est de préférence en tissu protégé thermiquement mais qui peut aussi être une pièce rigide en plastique renforcé par une charge isolante,
- une contreplaque (24), de préférence en matériau plastique chargé fibre de verre. Cette contreplaque comporte les picots (25a, 25b, etc.) qui passent au travers des orifices (26a, 26b, etc.) de la platine (21) pour recevoir les fixations (27a, 27b, etc.). Ces fixations sont de préférence des écrous en matériau plastique chargé, mais on peut également utiliser d'autres types d'écrous ou encore un dispositif de rivetage ou de bouterolage.

Le module électronique (28) comprenant une source d'énergie vient se glisser dans la platine (21). Le générateur de gaz (7) vient lui aussi se positionner dans la platine (21) par l'intermédiaire du tube (22) dans lequel la sortie du col (29) et son conjoint d'étanchéité viennent se loger.

La figure 5 représente une vue en perspective du générateur de gaz (7) du dispositif de protection de la figure 4. Le générateur comporte sur la face arrière les fiches (30) de branchement de l'allumeur du générateur et sur les côtés les dents (31) du boîtier générateur destinées au blocage du boîtier (32) sur la platine.

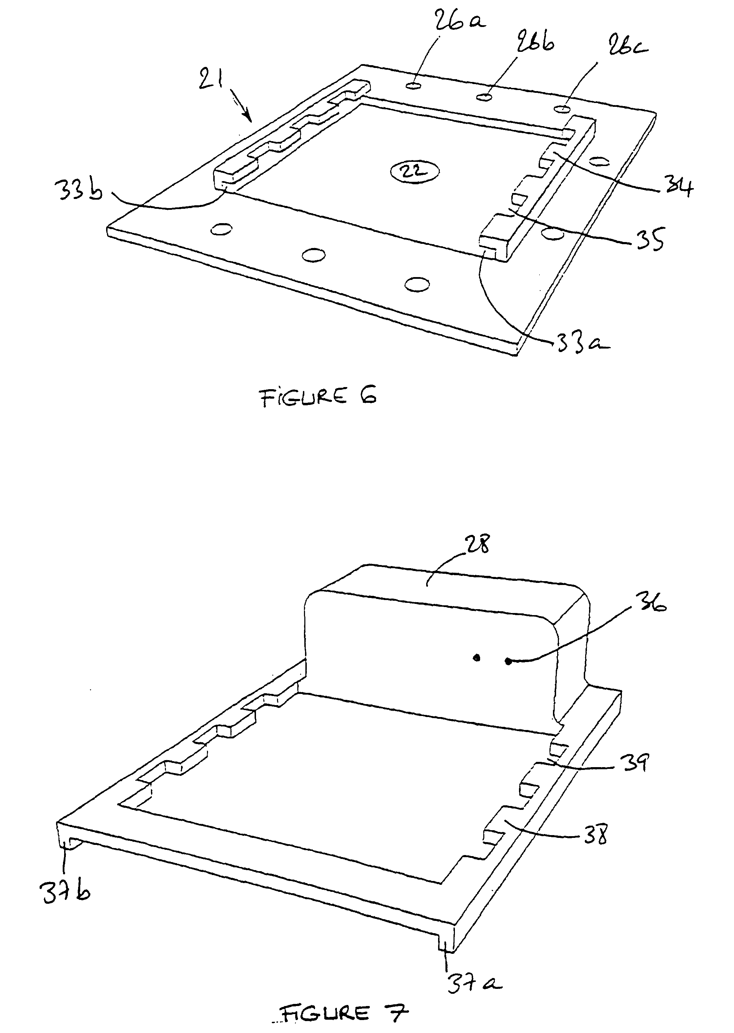

La figure 6 représente une vue en perspective de la platine (21) du dispositif de la figure 4. Elle comporte les deux rainures (33a, 33b) de blocage du générateur de gaz équipées de leurs dents (34) et de leur encoches (35). Elle comporte aussi le tube de centrage (22) et les différents trous (26a, 26b, etc.) destinés au passage des picots (25a, 25b, etc.) de la contreplaque (24).

La figure 7 présente une vue en perspective du module électronique (28) du dispositif de la figure 4. Il comporte la prise de branchement (36) des fiches (30) de l'allumeur du générateur de gaz. Il comporte aussi le cadre de blocage du générateur de gaz (7) sur la platine (21). Ce cadre est composé de deux règlets (37a, 37b) qui viennent se positionner dans les rainures (33a, 33b) de la platine (21). Ces deux règlets comportent des dents (38) et des encoches (39).

La fixation de l'ensemble coussin-générateur est réalisé de la façon suivante :
a) on introduit la contreplaque (24) dans l'étui de protection (23),
b) on introduit cet ensemble dans' le coussin gonflable (10),
c) on positionne la platine (21) en utilisant le tube de centrage (22) dans le trou principal du tissu,
d) on introduit les picots (25a, 25b) dans les trous correspondants du coussin gonflable (10) et dans les trous correspondants (26a, 26b) de la platine (21) et on assure le serrage à l'aide des écrous (27a, 27b),
e) on glisse les réglets (37a, 37b) du module électronique (28) dans les rainures (33a, 33b) de la platine en superposant les dents de ces deux pièces,
f) on monte le générateur de gaz (7) dans l'ensemble ci-dessus en introduisant le tube sortie de col (29) dans le tube de centrage (22), et les dents du boîtier du générateur de gaz (31) viennent se glisser dans les encoches (35, 39) de la platine (21) et du module électronique (28),
g) on pousse le module électronique (28) vers le générateur de gaz jusqu'au contact ; ceci a pour effet de fermer les encoches (35) de la platine par les dents (38) du module électronique (28) et de brancher les fiches (30) de l'allumeur du générateur sur la prise (36) du module électronique (28).

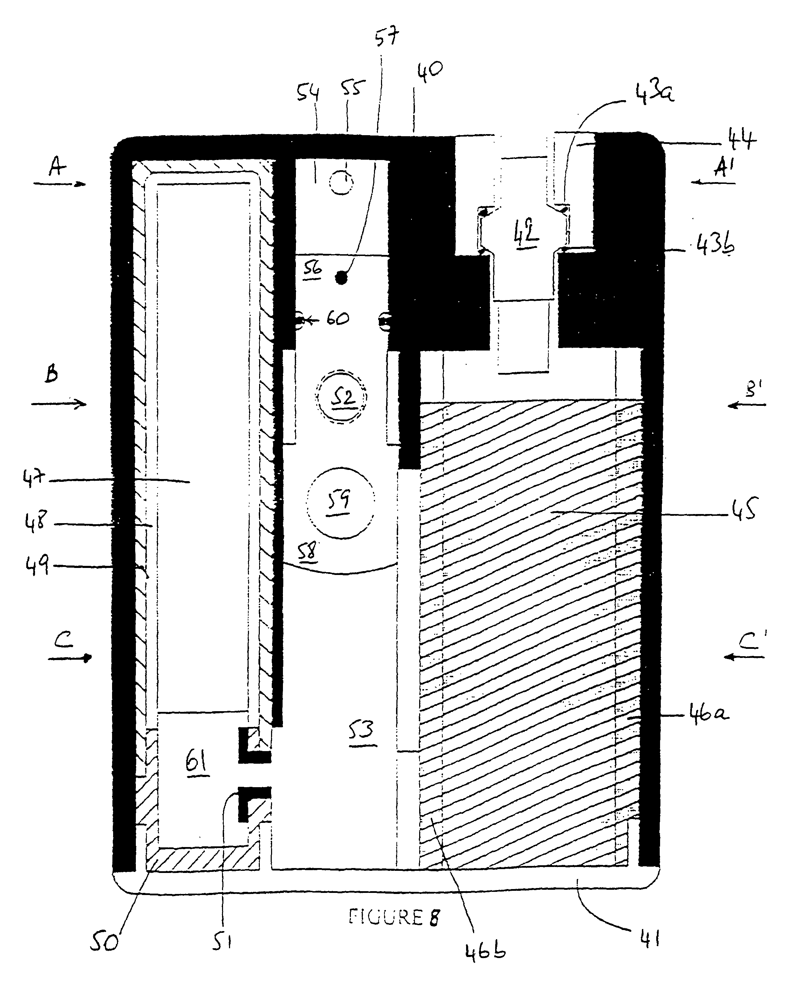

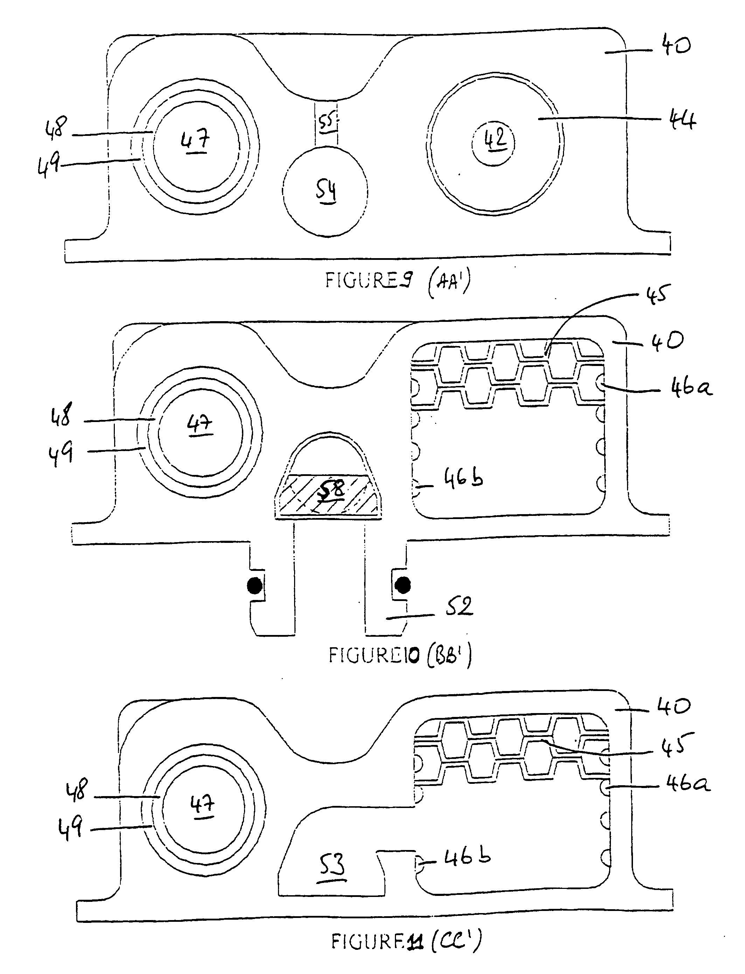

Le générateur de gaz d'un dispositif de protection selon l'invention, et le fonctionnement de ce générateur, vont être décrits ci-après, en référence aux figures 8 à 11, qui décrivent un exemple concret de réalisation, les figures 9 à 11 étant des vues en coupe du générateur de la figure 8, à différents niveaux (AA', BB', CC', respectivement).

Le générateur est constitué des éléments suivants :
a) un corps (40) et un bouchon (41), de préférence en matériaux thermoplastiques chargés en fibres longues (verres ou aramide). On peut également utiliser des matériaux thermodurcissables chargés, ou des matériaux composites voire même métalliques,
b) un allumeur électrique (42) équipé de deux joints d'étanchéité (43a, 43b) bloqués par l'écrou d'allumeur (44), de préférence en matériaux thermoplastiques chargés en fibres longues,
c) la charge de propergol (45) du 1^{er} régime de combustion. Le propergol se présente sous forme de plaques gaufrées par plots, empilées, et maintenues par des bossages (46a, 46b) inclus dans le corps (40) ou le bouchon (41),
d) la charge de propergol (47) du 2^{ème} régime, qui se présente sous forme d'un jonc inclus dans un inhibiteur (48). L'ensemble est placé dans un étui de charge (49) et son bouchon (50) réalisé de préférence en matériau thermoplastique chargé en fibres de verre. Le col (51) est préférentiellement en matériau réfractaire,
e) le dispositif d'ouverture du col principal (52). Afin d'éviter toute éjection d'un obturateur permettant la montée en pression dans la chambre de combustion (53), on utilise selon l'invention un désobturateur de col à poussoir. Ce désobturateur est composé d'un logement (54) comportant un évent anti « dashpot » (55). Le désobturateur (56) est destiné à coulisser dans le logement (54) sous l'effet de la pression dans la chambre (53). Son mouvement est initialisé à une pression souhaitée dans la chambre (53) par la rupture de la goupille calibrée (57). La languette (58) du désobturateur (56) se déplace et l'orifice (59) vient se positionner au droit du col principal (52). La pression dans la chambre maintient le désobturateur en position ouverte pendant toute la durée du fonctionnement du générateur de gaz. L'étanchéité est assurée par le joint (60).

Le fonctionnement du générateur de gaz birégime est décrit ci-après. Sous l'effet d'une impulsion électrique délivrée par le système électronique et sa source d'énergie contenue dans le module électronique (28), l'allumeur fonctionne et génère des gaz chauds qui allument le propergol de la charge (45) du 1^{er} régime. La pression augmente dans la chambre (53), le désobturateur (56) libère le col principal (52) et les gaz produits par la combustion du propergol (45) transitent par le col principal (52) et gonflent rapidement le coussin gonflable (10). Les gaz chauds produits par le propergol (45) entrent dans la chambre (61) du bloc de propergol (47) du 2^{ème} régime et allume celui-ci. Après la fin de la combustion du propergol (45) du 1^{er} régime qui a permis le gonflage rapide du coussin gonflable, la combustion du bloc de propergol (47) du 2^{ème} régime assure par un faible débit durable le maintien en pression de la structure gonflable.

## Revendications

1. Dispositif de protection comprenant un coussin gonflable (10) porté par un individu, un générateur de gaz (7) permettant le gonflage du coussin, et un moyen de déclenchement du générateur de gaz, **caractérisé en ce que** le générateur de gaz présente un régime de combustion pyrotechnique birégime,
le générateur de gaz birégime étant monobloc et comprenant une 1^{ère} et une 2^{ème} chambres de combustion (53, 61), correspondant respectivement au 1^{er} et au 2^{ème} régimes de combustion du générateur, et équipée chacune d'un col de régulation de débit (52, 51),
le 1^{er} régime de combustion assurant une 1^{ère} phase de gonflage rapide du coussin gonflable (10) qui dure 60 ms maximum, et le 2^{ème} régime de combustion assurant une 2^{ème} phase de maintien en pression du gonflage qui dure au moins 4 s.

2. Dispositif selon la revendication 1, **caractérisé en ce que** le générateur de gaz est monoallumage.

3. Dispositif selon la revendication 2, **caractérisé en ce que** l'allumage du gaz (45) contenu dans la 1^{ère} chambre de combustion (53) et correspondant, au 1^{er} régime de combustion est assuré par un allumeur électrique (42), et l'allumage du gaz (47) contenu dans la 2^{ème} chambre de combustion (61) et correspondant au 2^{ème} régime de combustion est assuré par les gaz chauds générés par la combustion du propergol (45) contenu dans la 1^{ère} chambre de combustion.

4. Dispositif selon l'une quelconque des revendications 1 à 3, **caractérisé en ce que** la 1^{ère} phase de gonflage dure de 30 à 50 ms, et la 2^{ème} phase de maintien en pression du gonflage dure de 5 à 8 s.

5. Dispositif selon l'une quelconque des revendications 1 à 4, **caractérisé en ce que** le coussin gonflable (10) comprend en outre un ou plusieurs évents d'amortissement, éventuellement en élastomère, présentant de préférence des lignes de pré-fragilisation.

6. Dispositif selon l'une quelconque des revendications 1 à 5, **caractérisé en ce que** le moyen de déclenchement du générateur de gaz (7) est électronique.

7. Dispositif selon la revendication 6, **caractérisé en ce que** le moyen de déclenchement du générateur de gaz (7) comprend un module capteur-émetteur placé sur le véhicule et transmettant des informations à un module récepteur-allumage placé sur l'individu, l'un ou l'autre de ces modules comprenant un composant discriminant.

8. Dispositif selon la revendication 7, **caractérisé en ce que** la transmission des informations entre les deux modules se fait par liaison (4) radiocodée ou filaire.

9. Dispositif selon l'une ou l'autre des revendications 7 et 8, **caractérisé en ce que** le module capteur-émetteur comprend un composant capteur constitué d'un capteur accélérométrique trois axes.

10. Dispositif selon l'une quelconque des revendications 7 à 9, **caractérisé en ce que** la transmission des informations entre les deux modules se fait par liaison radiocodée, le module capteur-émetteur étant équipé d'un composant de réalisation du codage, et le module récepteur-allumage étant équipé d'un composant d'acquisition du codage.

11. Dispositif selon l'une quelconque des revendications 1 à 10, **caractérisé en ce que** le moyen de déclenchement du générateur de gaz (7) comprend un composant discriminant prenant en compte un paramètre de non-déclenchement du générateur de gaz constitué de la valeur de la vitesse du véhicule supérieure à une vitesse seuil en l'absence d'un choc.

12. Dispositif selon l'une quelconque des revendications 1 à 11, **caractérisé en ce que** les différents éléments constituant le générateur de gaz sont réalisés en matériaux composites ou thermoplastiques chargés de fibres ou de poudres.

13. Dispositif selon l'une quelconque des revendications 1 à 12, **caractérisé en ce que** la désobturation du générateur de gaz (7) se fait par translation d'un désobturateur de col (56), dont le mouvement est généré par la pression dans la 1^{ère} chambre de combustion (53) du générateur, dès que ladite pression atteint un niveau seuil permettant le cisaillement d'une goupille calibrée (57).

14. Dispositif selon l'une quelconque des revendications 1 à 13, **caractérisé en ce qu'**il comprend un témoin d'aptitude fonctionnelle, en particulier visuel et/ou sonore.

## Patentansprüche

1. Schutzvorrichtung, umfassend ein von einem Individuum getragenes aufblasbares Kissen (10), einen das Aufblasen des Kissens ermöglichenden Gasgenerator (7) und ein Mittel zum Auslösen des Gasgenerators,
**dadurch gekennzeichnet, dass** der Gasgenerator einen Bereich zweistufiger pyrotechnischer Verbrennung aufweist, wobei der zweistufige Gasgenerator einstückig ist und eine erste und eine zweite Verbrennungskammer (53, 61) aufweist, welche jeweils dem ersten und dem zweiten Verbrennungsbereich des Generators entsprechen, und von denen jede mit einem Hals zur Durchsatzregulierung (52, 51) versehen ist, wobei der erste Verbrennungsbereich eine erste schnelle Phase des Aufblasens des aufblasbaren Kissens (10) gewährleistet, die maximal 60 ms dauert, und der zweite Verbrennungsbereich eine zweite Phase der Beibehaltung des Aufblasdruckes gewährleistet, welche wenigstens 4 s dauert.

2. Vorrichtung nach Anspruch 1, **dadurch gekennzeichnet, dass** der Gasgenerator eine Einzel-Zündung aufweist.

3. Vorrichtung nach Anspruch 2, **dadurch gekennzeichnet, dass** die Zündung des Gases (45), das in der ersten Verbrennungskammer (53) enthalten ist und dem ersten Verbrennungsbereich zugehörig ist, durch eine elektrische Zündvorrichtung (42) gewährleistet ist, und dass die Zündung des Gases (47), das in der zweiten Verbrennungskammer (61) enthalten ist und dem zweiten Verbrennungsbereich zugehörig ist, durch warme Gase gewährleistet ist, die durch die Verbrennung von in der ersten Verbrennungskammer enthaltenem Propergol (45) erzeugt werden.

4. Vorrichtung nach einen der Ansprüche 1 bis 3, **dadurch gekennzeichnet, dass** die erste Phase des Aufblasens von 30 bis 50 ms dauert und die zweite Phase des Beibehaltens des Aufblasdruckes von 5 bis 8 s dauert.

5. Vorrichtung nach einem der Ansprüche 1 bis 4, **dadurch gekennzeichnet, dass** das aufblasbare Kissen (10) femer einen oder mehrere Dämpfungs-Luftkanäle, gegebenenfalls aus Elastomer, umfasst, welche vorzugsweise Sollbruchlinien aufweisen.

6. Vorrichtung nach einem der Ansprüche 1 bis 5, **dadurch gekennzeichnet, dass** das Auslösemittel des Gasgenerators (7) elektronisch ist.

7. Vorrichtung nach Anspruch 6, **dadurch gekennzeichnet, dass** das Auslösemittel des Gasgenerators (7) ein Sender-Sensor-Modul umfasst, das am Kraftfahrzeug angeordnet ist und Informationen zu einem am Individuum angeordneten Empfänger-Zündungs-Modul überträgt, wobei das eine oder das andere dieser Module ein Unterscheidungsbauteil umfasst.

8. Vorrichtung nach Anspruch 7, **dadurch gekennzeichnet, dass** die Übertragung von Informationen zwischen den beiden Modulen über eine funkcodierte oder eine drahtgebundene Verbindung stattfindet.

9. Vorrichtung nach Anspruch 7 oder 8, **dadurch gekennzeichnet, dass** das Sender-Sensor-Modul ein Sensorbauteil umfasst, das von einem Drei-Achsen-Beschleunigungssensor gebildet ist,

10. Vorrichtung nach einem der Ansprüche 7 bis 9, **dadurch gekennzeichnet, dass** die Übertragung von Informationen zwischen den beiden Modulen durch funkcodierte Verbindung stattfindet wobei das Sender-Sensor-Modul mit einem Bauteil zur Realisierung der Codierung ausgerüstet ist, und wobei das Empfänger-Zündungs-Modul mit einem Bauteil zur Erfassung der Codierung ausgerüstet ist.

11. Vorrichtung nach einem der Ansprüche 1 bis 10, **dadurch gekennzeichnet, dass** das Auslösemittel des Gasgenerators (7) ein Unterscheidungsbauteil umfasst, das einen Parameter zum Nicht-Auslösen des Gasgenerators berücksichtigt, wobei der Parameter durch den Wert der Fahrzeuggeschwindigkeit gebildet ist, der größer ist als eine Schwellwertgeschwindigkeit bei einem nicht vorhandenem Aufprall.

12. Vorrichtung nach einem der Ansprüche 1 bis 11, **dadurch gekennzeichnet, dass** die verschiedenen den Gasgenerator bildenden Elemente aus Verbundstoffen oder faserhaitigen oder pulverhaltigen Thermoplasten realisiert sind.

13. Vorrichtung nach einer dem Ansprüche 1 bis 12 **dadurch gekennzeichnet, dass** das Entsperren des Gasgenerators (7) durch Verschiebung eines Halsverschlusses (56) stattfindet, dessen Bewegung durch den Druck in der ersten Verbrennungskammer (53) des Generators erzeugt ist, sobald der Druck einen Schwellwert erreicht, der den Schub eines kalibrierten Stifts (57) ermöglicht.

14. Vorrichtung nach einem der Ansprüche 1 bis 13, **dadurch gekennzeichnet, dass** sie eine Funktions-Brauchbarkeits-Warnanzeige umfasst, insbesondere Visuell oder/und tönend.

## Claims

1. A protective device comprising an airbag (10) worn by a person, a gas generator (7) for inflating the airbag, and means for activating the gas generator, **characterized in that** the gas generator has a pyrotechnic dual stage combustion, the dual stage gas generator (7) being single-piece and comprising a 1st and a 2nd combustion chambers (53, 61), corresponding respectively to the 1st and to the 2nd combustion stages of the generator, each being equipped with a neck for regulating the flow rate (52, 51), the first combustion stage providing a 1st rapid inflating phase of the airbag (10) lasting 60 ms at most, and the second combustion stage providing a 2^{nd} phase maintaining inflation under pressure lasting at least 4 s.

2. The device as claimed in claim 1, **characterized in that** the gas generator is single ignition.

3. The device as claimed in claim 2, **characterized in that** the gas (45) contained in the 1st combustion chamber (53) and corresponding to the 1st combustion stage is ignited by an electric igniter (42), and the gas (47) contained in the 2nd combustion chamber (61) and corresponding to the 2nd combustion stage is ignited by the hot gases generated by the combustion of the propellant (45) contained in the 1st combustion chamber.

4. The device as claimed in any one of claims 1 to 3, **characterized in that** the first stage of inflation lasts from 30 to 50 ms and the second stage of maintenance under pressure lasts from 5 to 8 s.

5. The device as claimed in any one of claims 1 to 4, **characterized in that** the airbag (10) further comprises one or more damping vents, possibly made of an elastomer, preferably having prescored lines.

6. The device as claimed in any one of claims 1 to 5, **characterized in that** the means for activating the gas generator (7) is electronic.

7. The device as claimed in claim 6, **characterized in that** the means for activating the gas generator (7) comprises a sensor-transmitter module placed on the vehicle which transmits information to a receiver-igniter module placed on the person, either of these modules comprising a discriminating component.

8. The device as claimed in claim 7, **characterized in that** information is transmitted between the two modules by a radio-encoded or wire line (4).

9. The device as claimed in either of claims 7 and 8, **characterized in that** the sensor-transmitter module comprises a sensor component consisting of a triaxial accelerometric sensor.

10. The device as claimed in any one of claims 7 to 9, **characterized in that** information is transmitted between the two modules by a radio-encoded link, the sensor-transmitter module being equipped with a component for producing the code, and the receiver-igniter module being equipped with a component for acquiring the code.

11. The device as claimed in any one of claims 1 to 10, **characterized in that** the means for activating the gas generator (7) comprises a discriminating component taking into account a parameter for not activating the gas generator, consisting of the value of the vehicle speed greater than a threshold speed in the absence of a shock.

12. The device as claimed in any one of claims 1 to 11, **characterized in that** the various elements forming the gas generator are made from composite materials or thermoplastics filled with fibers or powders.

13. The device as claimed in any one of claims 1 to 12, **characterized in that** the gas generator (7) is unblocked by translation of a neck unblocking device (56), the movement of which is generated by the pressure in the 1st combustion chamber (53) of the generator, as soon as said pressure reaches a threshold level allowing a calibrated pin (57) to be sheared.

14. The device as claimed in any one of claims 1 to 13, **characterized in that** it comprises a functionality indicator, in particular a visual and/or audio indicator.
